# EUROPEAN PATENT APPLICATION

(11) **EP 1 525 917 A1**
(43) Date of publication of application: **27.04.2005**
(21) Application number: 03024420.6
(22) Date of filing: 23.10.2003
(51) Int. Cl.: B01L 3/00, F15C 5/00

(54) **Microfluidic device with feed-through**

(71) Applicant: F. Hoffmann-La Roche AG, 4070 Basel (CH); Roche Diagnostics GmbH, 68305 Mannheim (DE)
(72) Inventor: Griss Patrick, 8004 Zurich (CH); siljegovic Vuk, 6440 Brunnen (CH)
(74) Representative: Hörschler, Wolfram Johannes, Dipl.-Ing.

(57) **Abstract**

The present invention is related to a microfluidic device (1, 30) having a front side (2) and a backside (3). The microfluidic device (1, 30) is provided with at least one first channel (14, 33, 34) on the front side (2) or the backside (3) of a substrate (1) and at least one second channel (15) on the front side (2) or the backside (3) of the substrate (1). The substrate (1) contains a feed-through area (12), to allow for a transfer of a liquid (20) from the front side (2) to the backside (3) of the substrate (1) or vice versa, driven by capillary forces.

## Description

### Field of the invention

The present invention is related to a microfluidic device which allows a liquid on its way through fluidic channels to flow from either side of a substrate to the other side thereof driven only via surface tension forces, i.e. via capillary forces.

### Background of the invention

Microfluidic devices in which liquid flow is driven via capillary forces are state of the art. According to known solutions microfluidic channels are etched on one side of various types of substrates such as glass, polyimide and silicon or metal.

In the publication "Plasma etched polymer microelectrochemical systems", Lab Chip, 2002, 2, pages 145-150, Joel S. Rossier, Christine Vollet, Amanda Carnal. Grégoire Lagger, Veronique Gobry, Hubert H. Girault, Philippe Michel and Frédéric Reymond, a method is disclosed how to pattern a photo-resist using a high resolution printer on a foil composed of three layers. After this step, both copper layers are chemically etched in order to serve as contact mask on the polyimide surface so as to produce the desired microstructure pattern. The foil is placed into a reactive plasma chamber in order to etch the exposed polyimide by means of an oxidizing plasma. The method disclosed enables to etch holes, lines or larger areas, thereby generating either microholes, microchannels or electrodes in the plastic material. The copper can then be chemically removed or further patterned to produce conductive pads which are further electroplated with gold. The microchannel is then covered with a polyethylene terephthalate/polyethylene (PET/PE) lamination to form channels.

From the publication "Glass Chips for High-Speed Capillary Electrophoresis Separations with Submicrometer Plate Heights", Anal. Chem. 1993, 65, pages 2637-2642, American Chemical Society, 1993, Carlo S. Effenhauser, Andreas Manz, and H. Michael Widmer a micromachined capillary electrophoresis system is known. The layout of the glass chips was performed by using a surface of a glass plate including a wet chemical etching step. This process involves the position of separate metal and photoresist layers onto the glass substrate, followed by illumination of the substrate through a metal mask containing the capillary pattern. After the photoresist has been developed, a HF-based solution is used in order to etch the capillary manifold into the substrate and the metal layer is finally removed. The dimension of the glass plate is 80x70x3 mm. In order to seal the capillary system a second glass plate of the same dimension was thermally bonded 4 h at 620°C on top of the plate containing the microstructures. Holes in the cover plate provide access to the capillaries.

### Summary of the invention

An object of the present invention is to provide for a microfluidic passive element, which allows a liquid in double sided microfluidic devices to flow from either side of a substrate to the other side only via surface tension forces, i.e. only via capillary forces.

In a co-pending European patent application it is shown that by etching channels on both sides of a substrate and using etch technique characteristics, non-closing valves, i.e. passive geometric valves can be created with which a flow of liquid by capillary forces can be stopped. The non-closing valve prevents that liquid passes from a channel on a frontside of a substrate into a channel, which is arranged on the other side of said substrate. This, however, poses the technical problem to have the liquid change the sides of the substrate, i.e. to change liquid flow direction from the front side to the backside of a substrate or vice versa only driven by capillary force. With the solution according to the present invention this particular problem is resolved, to have the liquid change the sides of the substrate.

According to the present invention a liquid flow from a front side channel ("liquid in") into a backside channel ("liquid out") or vice versa in a double side microfluidic network uniquely driven by capillary action is realized.

According to the present invention, on both sides of a substrate used as a microfluidic device at least one inlet channel and at least one outlet channel are present, overlapping each other within an area of a feed-through. A significant feature of the feed-through area is that the inlet channel ("liquid in") has a larger width or cross-section, respectively as compared to underlying or overlying outlet channel ("liquid out"). A further advantageous feature according to the present invention is that the inlet channel ("liquid in") may be sealed with a front seal which can function as a driving factor for the liquid to pass through the feed-through area connecting the channels within the substrate previously mentioned. If the width of the inlet-channel ("liquid in") is not chosen to be larger than the width of the outlet channel ("liquid out"), such a structure may act as a non-closing valve.

The feed-through area according to the present invention integrated into a microfluidic microsystem is a significant element enhancing the design-freedom to create complex capillary force driven microfluidic networks. One area of application of the subject matter of the present invention are time-triggered flow splitter devices as disclosed herein. A time-triggered flow splitter device according to the present invention includes non-closing valves, i.e. geometric valves and a feed-through device according to the present invention. The feed-through device allows to pass the liquid to be conveyed from one side to the other side of the substrate in order to enable the liquid to overrun the non-closing valves. The feed-through-area according to the present invention acts as an activation device to trigger liquid flow in a flow splitter which may comprise a plurality of splitted channels on one side of the substrate which are connected to a common outlet channel on the respective other side of the substrate.

### Brief description of the drawings

Preferred embodiments of the feed-through device according to present invention are described hereinafter as examples in reference to accompanying figures in which
- Fig. 1: shows a schematic cross-section of a double-sided microfluidic device with microchannels, arranged on both sides of a substrate,
- Fig. 2: a top view and a cross-sectional view of a feed-through device according to the present invention,
- Fig. 3: a schematic view of liquid driven by capillary forces in an inlet channel,
- Fig. 4: the filling stage of a widened portion of the inlet channel according to Fig. 3,
- Fig. 5: the rise of liquid through the feed-through area according to Fig. 2 into an outlet channel,
- Fig. 6: the feed-through area filled with liquid, the liquid being conveyed to the outlet channel,
- Fig. 7: a flow-splitter device having a plurality of channels on one side and a common outlet channel on the respective other side and
- Figs. 7.1 to 7.5: the various filling stages of a flow-splitter device according to Fig. 7.

### Description of preferred embodiments

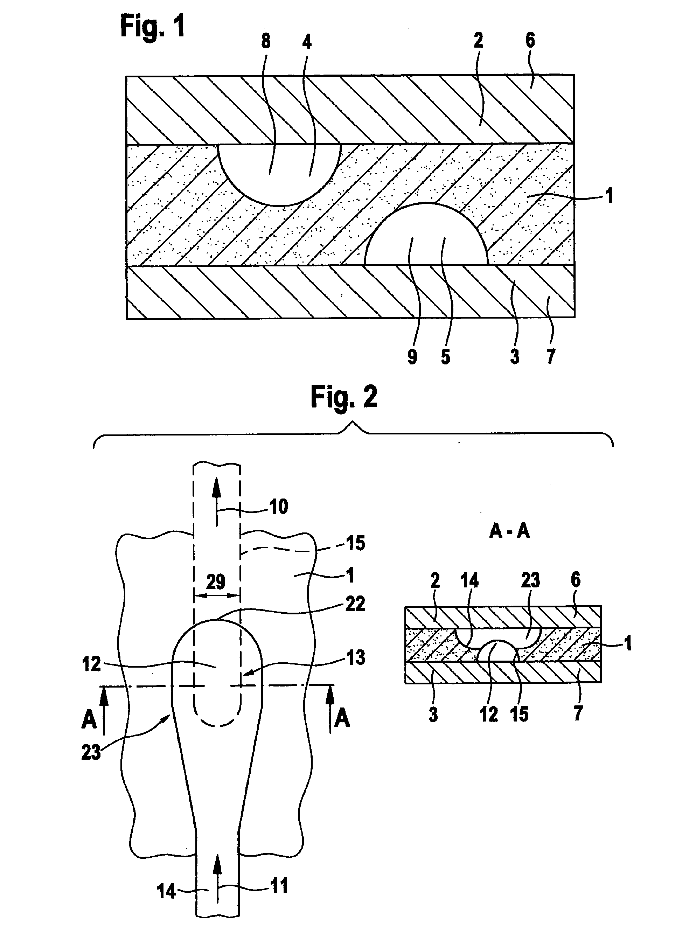

Fig. 1 shows a schematically given cross-section of a double-sided microfluidic device, microchannels being distributed on both sides of the substrate.

In the following the term "double-sided microfluids" defines a network of microchannels, the channels being distributed on both sides of a planar substrate. Materials for the respective substrates are - to give examples - very thin machined steel foils, having a thickness within the range from about 25 µm to 1000 µm. Further, polymeric materials, having a thickness within the range 10 µm to 1000 µm can be used such as polyimide-foils or liquid crystal polymer foils (LCP). Further materials to be used as substrates are glass and pyrex® within a thickness range between 100 µm and 1000 µm. It is en-visagable to use silicon-substrates the thickness of which is within a range from 25 µm and 2000 µm. In general plane etchable surfaces.

The double sided microfluidic device according to Fig. 1 comprises a substrate 1, having a front side 2 and a backside 3. The front side 2 of the substrate 1 is covered by a first seal 6, whereas the respective backside 3 of the substrate 1 is covered by a second seal 7. The seals 6, 7, respectively, cover at least one front side microchannel 4 or at least on backside microchannel 5. Instead of the microchannels 4, 5 given in Fig. 1, the substrate 1 may comprise a plurality of microchannels 4, 5, respectively, on both the front side 2 and the backside 3.

As shown in Fig. 1 the front side microchannels 4 and the backside microchannels 5, respectively, have a first cross-section 8 and a second cross-section 9. The respective cross-sections 8, 9 of the front side channel 4 and the backside channel 5 of the substrate 1 are shaped semi-circular in the embodiments given in Fig. 1. However, the cross-sections 8, 9, respectively of the front side channels 4 and the backside channels 5 may have a triangular, a trapezoidal, a rectangular or any other shape.

Fig. 2 shows a configuration of a feed-through area of a microfluidic device in top view and in cross-section thereof.

According to Fig. 2 - see top view - an inlet channel 14 ("liquid in") is provided on the front side 3 of the substrate 1. The inlet channel ("liquid in") has a widened area 23 which is of significant larger width as compared to an underlying outlet channel 15 given in dashed lines according to the top view in Fig. 2. The inlet channel 14 ("liquid in") and the respective outlet channel 15 ("liquid out") can of course be arranged vice versa in the substrate 1. The widened portion 23 is limited by a channel end 22 which defines an overlapping area 13 between the inlet channel 14 ("liquid in") and the outlet channel 15 ("liquid our") in the substrate 1 of the microfluidic device according to the top view in Fig. 2. The overlapping area 13 defines a feed-through area 12 within which the inlet channel 14 ("liquid in") and the respective underlying outlet channel ("liquid out") are connected with each other. By means of the feed-through area 12 in the substrate 1 a liquid flow from the inlet channel 14 ("liquid in") to the respective underlying outlet channel 15 ("liquid out") can be established, which is uniquely driven by capillary forces. Thus, a transfer of liquid from the front side 2 of the substrate 1 to the backside 3 of the substrate 1 can be established.

According to the present invention the feed-through area 12 is established by the interconnection of the inlet channel 14 ("liquid in") to the outlet channel 15 ("liquid out") by a widened portion 23. The width of the widened portion 23 exceeds the width of the outlet channel 15, to allow for a filling of the widened portion 23 with liquid 20. The width of said widened portion 23 exceeds the width 29 of the outlet channel 15 ("liquid out") to enhance the driving factor. For the capillary forces acting upon the liquid to be transferred it is advantageous to seal the inlet channel 14 ("liquid in") by the first seal 6. If, however, the width of the inlet channel 14 ("liquid in") is not chosen to be larger than the width 29 of the outlet channel 15 ("liquid out") the feed-through area 12 according to the top view in Fig. 2 would act as a non-closing valve, i.e. a passive force or a geometric force. However, due to the larger width of the widened area 23 of the inlet channel 14 ("liquid in") the feed-through area 12 acts as a fluid flow activator as will be described hereinafter.

The cross-section of Fig. 2 shows that the respective inlet channel 14 ("liquid in") comprises a widened portion 23 whereas the outlet channel 15 ("liquid out") connected therewith by the feed-through area 12 has a substantially lower width 29 as can be derived from the top view according to Fig. 2. Both channels, i.e. the inlet channel 14 ("liquid in") as well as the outlet channel 15 ("liquid out") are sealed by the first seal 6 and the second seal 7 having a substantially planar surface oriented towards the channels 14, 15, respectively. Concerning the cross-section of the inlet channel 14 ("liquid in") and the outlet channel 15 ("liquid out") it should be understood that the semi-circular shape according to the cross-section in Fig. 2 is given as an example only. The cross-section of the inlet channel 15 ("liquid in") and the outlet channel 15 ("liquid out") can be shaped triangular, rectangular, trapezoidal or in any other geometry.

The inlet channel 14 and the outlet channel 15 through which the flow of the liquid 20 is established, provide for a contact angle < 90°. The contact angle being < 90° allows for a liquid flow driven by capillary forces only without the requirement to apply an external energy source, for instants a pump or the like. If, however the respective inlet channel 14 and the respective outlet channel 15 are covered by cover members such as the seals 6, 7, respectively, those cover members also provide with respect to the liquid 20 for a contact angle < 90°.

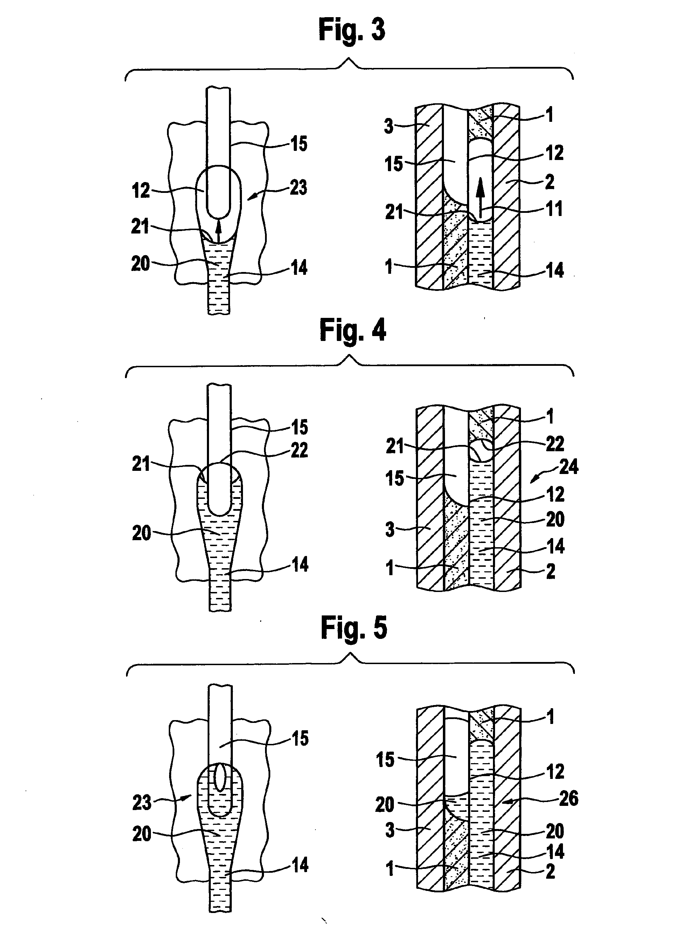

Fig. 3 shows liquid contained within the inlet channel 14 to enter the widened area of the inlet channel 14 ("liquid in"). Liquid 20 flowing within the inlet channel 14 ("liquid in") forms a meniscus 21. The liquid 20 has not reached the widened area 23 of the inlet channel 14, thus the feed-through area 12 interconnecting the inlet channel 14 and the outlet 15 is not active yet. In the cross-section given in Fig. 3, both channels, i.e. the inlet channel 14 ("liquid in") and the outlet channel 15 ("liquid out") are interconnected by the feed-through area. The liquid 20 flows in direction of inflow, labelled with arrow 11. Both channels 14, 15, respectively, are covered by the first seal 6, or by the second seal 7, respectively.

According to Fig. 4 a filling stage of the widened area of the inlet channel 14 ("liquid in") is shown. In the filling stage 24 the liquid 20, by means of capillary forces within the inlet channel 14 ("liquid in") has partially filled the widened portion 23 of the inlet channel 14 ("liquid in"), however, has not reached the respective channel end, labelled 22. According to the cross-section given in Fig. 4 as well the meniscus 21 of liquid 20 substantially flows within the inlet channel 14 and has not penetrated through feed-through area 12 into the respective outlet channel 15 ("liquid out")

Fig. 5 shows the liquid penetrating through the feed-through area from the widened portion of the inner channel (liquid in) into the outlet channel 15 (liquid out). After the liquid 20 has fully penetrated the widened portion 23 of the inlet channel 14 (liquid in), the liquid 20 penetrates through the feed-through area into the outlet channel 15 (liquid out) driven by capillary forces only. The capillary forces can be increased by arrangement of the second seal 3, covering the surface of the outlet channel 15 (liquid out). In the stage given in Fig. 5, a pass-over stage 26, the liquid 20 slowly penetrates from the inlet channel 14 into the outlet channel 15 (liquid out of the substrate 1), via the feet through area 12.

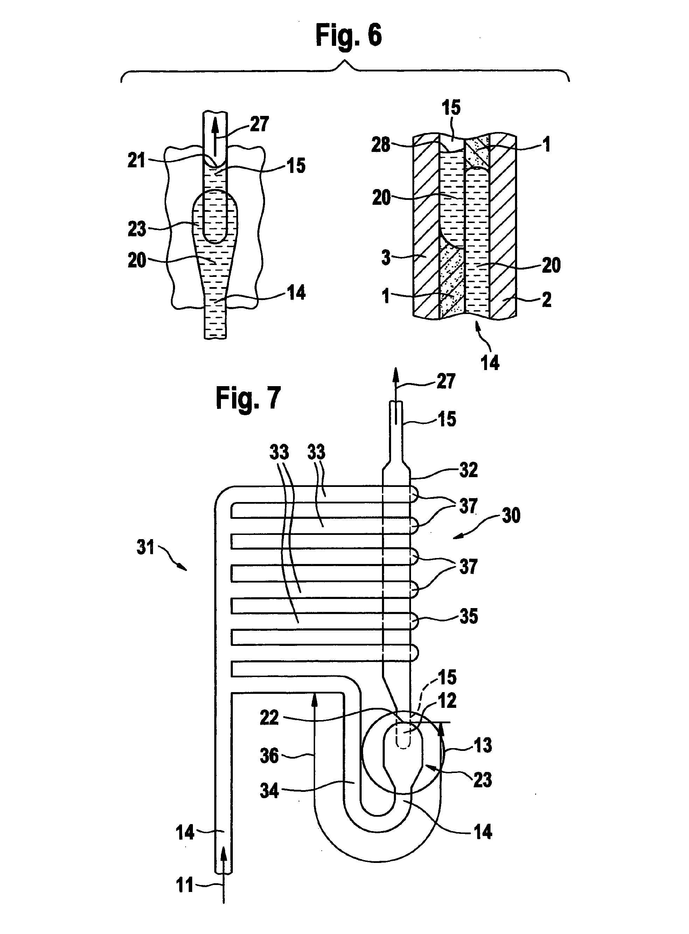

Fig. 6 shows the liquid having completely penetrated the feed-through area 12 of the substrate 1. According to the views given in Fig. 6 liquid 20 having penetrated the feed-through area 12 has partially filled the outlet channel 15 and flows, thereby forming a meniscus 21, into the outlet channel 15. The flow of liquid has thus been directed from the front side of the substrate 1 to the backside thereof or vice versa. The flow direction of the liquid 20 having entered outlet channel 15 (liquid out) is labelled by arrow 27.

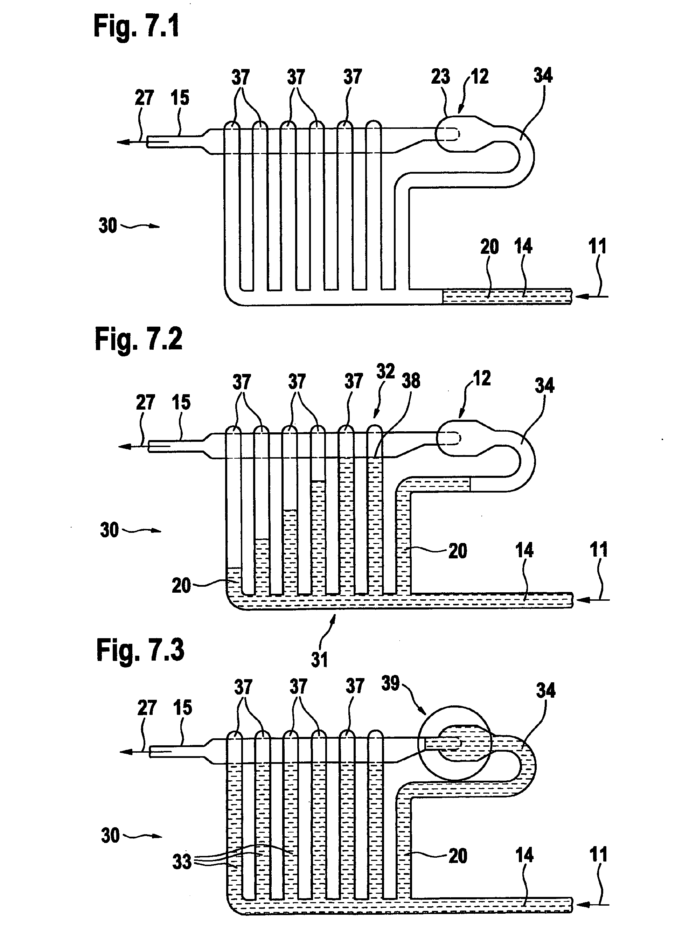

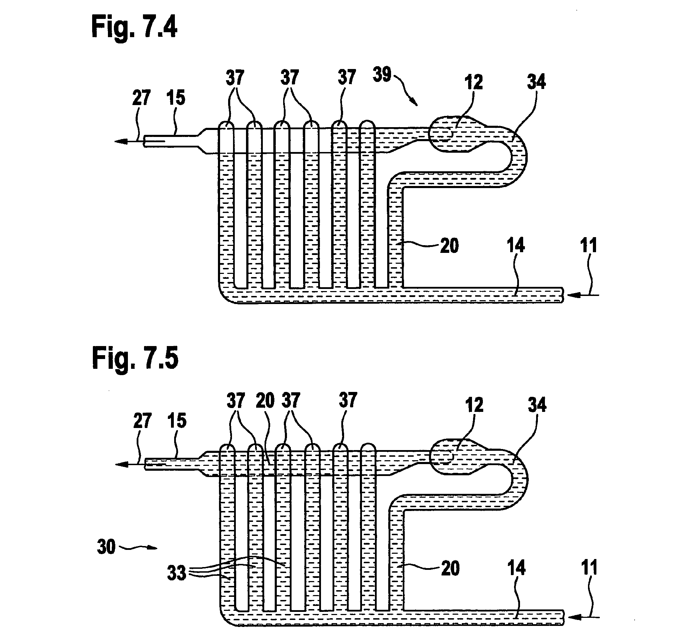

The solution according to the present invention allows for a liquid transfer from one side of a substrate to another side thereof by means of a feed-through area 12 which can be - to give an example - applied to a flow splitter micro fluidic device. According to Fig. 7 a time-triggered flow splitter microfluidic device is schematically shown. A time triggered flow splitter 30 comprises on a front side 2 of a substrate 1 the inlet channel 14 (liquid in); through said inlet channel 14 (liquid in) liquid enters the time triggered flow splitter device 30 in direction of inflow labelled by arrow 11. The inlet channel 14 (liquid in) divides into splitted channels 33 which are oriented substantially in parallel to one another given by reference numeral 33. The front side channels 31, i.e. the divided flow splitter channels 33, each extend on the front side 2 of the substrate 1 and overlap a common outlet channel 15 (liquid out) which is arranged below the plurality of splitted channels 33 on the backside of the substrate 1. Each channel out of the plurality of channels 33 forms with the underlying outlet channel 15 (liquid out) a passive valve 35, thus a plurality 37 of passive valves 35 are formed at each intersection between one channel of the plurality of splitted channels 33 of the front side 2 of the substrate 1 and by the common, underlying outlet channel 15 (liquid out).

The time-triggered flow splitter device 30 further comprises a trigger channel 34 the length of which is labelled by reference numerals 36. The trigger channel 34, i.e. a branch-off of the inlet channel 14 (liquid in), comprises a widened area 23 which communicates with a portion of the common outlet channel 15 (liquid out). The branched-off inlet channel 14 ends at channel end 22. By means of the feed-through area 12 between the widened area 23 of the branched-off inlet channel 14 (liquid in) and the respective end of the common outlet channel (liquid out) liquid enters from one side of the substrate 1 to the other side thereof.

The feed-through area 12 is an important element concerning the freedom of design to create more complex capillary force driven microfluidic networks such as the time-triggered flow splitter device 30. This device 30 contains passive valves 35 as well as a feed-through area 12 according to the present invention. By means of the feed-through area 12 it is achieved to pass the liquid 20 from the front side 2 of the substrate 1 to the backside 3 of the substrate in order to enable the liquid 20 to overrun the passive valves 35. In this respect the feed-through area 12 connecting the branched-off inlet channel 14 (liquid in) to the common outlet channel 15 (liquid out) on the other side of the substrate functions as a trigger element to start flow of liquid 20 into liquid flow direction 27 as labelled by the respective arrow in Fig. 7. The feed-through area 12 allows for a change of planes if in which the liquid 20 is conveyed on the substrate 1. The length of the trigger channel 34 influences the residual time of liquid 20 within a time-triggered flow splitter device 36 which is given in more detail in figures 7.1 to 7.5. The feed-through area 12 allows a design of a microfluidic device in a first alternative in which the liquid 20 is conveyed from the front to the backside of the respective substrate such as a polyimide foil or a very thin machined steel foil or in the second alternative from the backside to the front side of the respective substrate 1 depending on the specific requirements and depending on the application of the respective microfluidic device.

The figure sequence Fig. 7.1 to 7.5 shows different stages of a liquid flow through a time triggered flow splitter microfluidic device according to Fig. 7.

Fig. 7.1 depicts fluid 20 entering via inlet channel 14 (liquid in) into the time triggered flow splitter microfluidic device 30. In the stage of the flow of the liquid 20 the plurality 33 of splitted channels on the front side of the time triggered flow splitter device 30 is still inactive. The widened portion 23 of the branched-off inlet channel 34 is still empty, i.e. there is no liquid branched-off from the inlet channel 14 (liquid in) present.

In Fig. 7.2 liquid being fed to the time triggered flow splitter microfluidic device 30 has partially reached the branched-off inlet channel 34 as well as some of the channels of the plurality 33 of splitted channels on the front side of the time triggered flow splitter microfluidic device 30. The liquid 20, having penetrated to of the splitted channels of the plurality 33 of splitted channels, stops at position 38, i.e. at the passive valves 35 interconnecting the ends of each channel of the plurality 33 of splitted channels with the common outlet channel 15 (liquid out) arranged on the respective other side of the time triggered flow splitter microfluidic device 30. The liquid 20 has partially flown through the branched-off inlet channel towards the feed-through area 12, but has not yet reached the feed-through area 12. The common outlet channel 15 (liquid out) is arranged on the backside as a backside channel 32 of the substrate 1 of the time triggered flow splitter microfluidic device.

Fig. 7.3 shows the liquid 20 having penetrated all of the channels of the plurality of channels of the time triggered flow splitter microfluidic device and having penetrated the respective feed-through area. According to the stage of the liquid flow all of the splitted channels of the plurality 33 of splitted channels are filled with liquid. Further liquid has entirely flown through the branched-off inlet channel 34 and has penetrated the feed-through area 12 of the branched-off inlet channel 34, i.e. has reached the respective backside of the substrate of the time triggered flow splitter microfluidic device 30. However, in this stage, the plurality 37 of passive valves 35 is still active. Thus, no fluid flow from the plurality 33 of each of the splitted microchannels has started yet into the underlying outlet channel 15 (liquid out) of the time triggered flow splitter device 30.

According to the stage of fluid flow given in Fig. 7.4 the liquid has penetrated the feed-through area and has partially reached the common outlet channel (liquid out) on the backside of the time triggered flow splitter microfluidic device 30. The liquid 20 has overrun (reference numeral 39) the plurality 37 of passive valves 35 being arranged between the respective ends of each of the plurality 33 of microchannels arranged on the front side 2 of the substrate 1 of the time triggered flow splitter microfluidic device. Thus, a flow of liquid 20 into flow direction 27 through the opening of the respective outlet channel 15 (liquid out) is created. By means of the fully penetrated feed-through area 12 connecting the branched-off inlet channel 34 with the common outlet channel 15 (liquid out) on the respective backside of the substrate, the passive valves 34 at the end of the plurality of microchannels 33 are overrun, thus starting fluid flow of liquid 20 into liquid flow direction 27 in a sequential manner.

According to the stage given in Fig. 7.5, the liquid flow out of all of the microchannels of the plurality 33 of microchannels of the time-triggered flow splitter microfluidic device has begun. Since the feed-through area 12 in the branched-off inlet channels 34 is active, a continuous flow of liquid 20 through each of the microchannels on the front side of the substrate 1 has begun. The font side 2 of the time-triggered flow device 30 is connected to the backside 3 on which the backside microchannels 32 are arranged, thus allowing fluid flow from the front side 2 to the respective backside 3 of the time-triggered flow splitter microfluidic device 30 as given in greater detail in Fig. 7. If, however, the outlet channel 15 (liquid out) has sufficient hydrophilic properties, which can be improved by a corresponding coating or surface treatment, the liquid 20 may be drawn into it without a respective second seal 7 as shown in Fig. 7.2 or in the figure sequence of Figs. 7.3 to 7.5, respectively. By means of the plurality 37 of passive valves, i.e. non-closing valves or geometric valves, one micro channel after the other micro channel of the plurality 33 of micro channels of the time-trigger flow micro fluidic device 30 is opened, thus causing a sequential enhancement of fluid flow through the common outlet channel 15. To each of the single channel of the splitted channel 33 arranged on the respective front side of the substrate 1 a passive valve, i.e. a geometric valve is assigned. Depending on the length of the respective trigger channel 34 a controlled delay of fluid flow in outlet direction 10 can be created, thus extending the residence time of the liquid 20 in the plurality of channels 33.

The feed-through area 12 connecting the respective front side 2 and the respective backside 3 of the substrate 1 of a microfluidic device allows for a larger freedom of design to create more complex capillary force driven microfluidic networks such as a time-triggered flow splitter microfluidic device 30 as given in Figs. 7 and 7.1 to 7.5, respectively. By means of the feed-through area 12 particularly comprising a microchannel having a widened portion 23 acts as a trigger element for a flow 27 of liquid 20 and allows to overrun passive valves 35 and to create a fluid flow.

With microfluidic devices as described above, a processing of human blood, a liquor or other body fluid, samples, aqueous solutions of reagents, liquids containing organic solutions or oil is possible.

### Reference Numeral List

- 1: Substrate
- 2: front side
- 3: Backside
- 4: front side channels
- 5: backside channels
- 6: first seal
- 7: second seal
- 8: first cross-section
- 9: second cross-section
- 10: direction of outflow of liquid
- 11: direction of inflow of liquid
- 12: feed-through opening
- 13: overlapping area
- 14: inlet channel
- 15: (underlying/overlying) outlet channel
- 20: Liquid
- 21: Meniscus
- 22: channel-end
- 23: widened area
- 24: filling stage of widened area
- 25: liquid rise within widened area
- 26: Pass-over stage
- 27: liquid flow direction
- 28: Meniscus
- 29: width of outlet channel (liquid out)
- 30: time-triggered flow splitter
- 31: front side channels
- 32: Backside channels
- 33: splitted channels (front side)
- 34: trigger channel
- 35: passive valves
- 36: channel length
- 37: plurality of passive valves
- 38: liquid stop
- 39: liquid overrun

## Claims

1. Microfluidic device (1, 30), having a front side (2) and a backside (3) and being provided with at least one first channel (14, 33, 34) on the front or backside (2, 3), respectively, and at least one second channel 15 on the front or backside (2, 3), respectively, wherein a substrate (1) contains a feed-through area (12) to allow for transfer of a liquid (20) from the front side (2) to the backside (3) of the substrate (1) or vice versa driven by capillary forces, wherein the first channel (14, 34) includes a widened area (23) within the feed-through area (12) in the substrate (1).

2. Microfluidic device according to claim 1, wherein the first channel is an inlet channel (14, 34) for the liquid (20).

3. Microfluidic device according to claim 1, wherein the width of the widened area (23) exceeds a width (29) of a second channel (15) interconnected at the feed-through area (12) to the first channel (14, 34).

4. Microfluidic device according to claim 1, wherein cross-sections (8, 9) of the first channels (14, 33, 34) and the second channels (15) are semi-circular, rectangular, triangular or trapezoidal.

5. Microfluidic device according to claim 1, wherein the first channels (14, 33, 34) are covered by a first seal (6).

6. Microfluidic device according to claim 6, wherein the first seal (6) comprises a planar surface, oriented towards the at least one first channel (14, 33, 34).

7. Microfluidic device according to claim 1, wherein the second channel (15) is an outlet channel for the liquid (20).

8. Microfluidic device according to claim 7, wherein the second channel (15) has a constant width (29).

9. Microfluidic device according to claim 7, wherein the widened channel (15) has a varying width.

10. Microfluidic device according to claim 7, wherein the second channel (15) is covered with a second seal (7).

11. Flow-splitter device (30), wherein on the front side (2) of a substrate (1) a plurality (33) of splitted channels and on the backside (3) a common outlet channel (15) are arranged, the front side (2) and the backside (3) of the substrate (1) being interconnected by a feed-through area (12).

12. Flow-splitter device (30) according to claim 11, wherein a branched-off inlet channel (14) is connected to the common outlet channel (15) via a feed-through area (12).

13. Flow-splitter device (30) according to claim 11, wherein the plurality (33) of splitted channels is connected to the common outlet channel (15) by passive valves (35,37).

14. Flow-splitter device (30) according to claim 12 or 13, wherein the feed-through area (12) enables liquid (20) to overrun the plurality (27) of passive valves (35).
